# EUROPEAN PATENT SPECIFICATION

(11) **EP 3 929 242 B1**
(45) Date of publication and mention of the grant of the patent: **09.09.2026**
(21) Application number: 20902815.8
(22) Date of filing: 09.12.2020
(51) Int. Cl.: C08L 83/04, C08L 83/06, C08K 3/22, C08K 3/28, C08K 3/36, C08K 9/08, C08J 3/20, C09K 5/14, C08J 5/18, C08K 3/38

(54) **THERMALLY CONDUCTIVE COMPOSITION AND METHOD FOR PRODUCING SAME**
WÄRMELEITFÄHIGE ZUSAMMENSETZUNG UND VERFAHREN ZU IHRER HERSTELLUNG
COMPOSITION THERMOCONDUCTRICE ET SON PROCÉDÉ DE PRODUCTION

(30) Priority: 18.12.2019 JP 2019228349
(43) Date of publication of application: 29.12.2021
(73) Proprietor: Fuji Polymer Industries Co., Ltd., Nagoya-shi, Aichi 450-0002 (JP)
(72) Inventor: KAMIYA, Yuki, Nagoya-shi (JP); HATTORI, Masakazu, Nagoya-shi (JP)
(74) Representative: Dehns
(86) International application number: PCT/JP2020/045782
(87) International publication number: WO 2021/124998

(56) References cited:
- WO-A1-2013/051600
- WO-A1-2016/190258
- JP-A- 2006 274 155
- US-A1- 2019 161 666

## Description

### Technical Field

The present invention relates to a thermally conductive composition with reduced interfacial debonding resulting from stress, and a method for producing the thermally conductive composition.

### Background Art

With the significant improvement in performance of semiconductors such as CPUs in recent years, the amount of heat generated by them becomes extremely large. For this reason, heat dissipating materials are attached to electronic components that may generate heat, and a thermally conductive sheet is used to improve the adhesion between heat dissipating members and semiconductors. The thermally conductive sheet has been required to have a high thermal conductivity, a low steady load value, and flexibility as recent devices become smaller in size and higher in performance. Patent Document 1 proposes to improve the compressibility, insulation properties, thermal conductive properties, etc. of a thermally conductive silicone composition by setting the viscosity of the composition to 800 Pa·s or less at 23°C before curing. Moreover, thermally conductive compositions containing a silicone resin recently have been proposed as heat dissipating materials for, e.g., hybrid vehicles, electric vehicles, and fuel cell powered vehicles (Patent Documents 2 and 3). JP 2006 274155 A discloses thermally conductive compositions based on silicone and alumina treated by a blend of 3-glycidoxypropyl trimethoxysilane and siloxane polymer with vinyl groups.

### Prior Art Documents

### Patent Documents

Patent Document 1: JP 2013-147600 A
Patent Document 2: JP 2014-224189 A
Patent Document 3: JP 2019-009237 A

### Disclosure of Invention

### Problem to be Solved by the Invention

However, in the conventional thermally conductive compositions, when inorganic particles with a small specific surface area are added to improve the thermal conductive properties, interfacial debonding may occur between the inorganic particles and the polymer due to stress.

To solve the above conventional problems, the present invention provides a thermally conductive composition that has high thermal conductive properties, a high compression repulsive force, and less interfacial debonding resulting from stress, and also provides a method for producing the thermally conductive composition.

### Means for Solving Problem

A thermally conductive composition of the present invention contains a base polymer, an adhesive polymer, and thermally conductive particles. A thermal conductivity of the thermally conductive composition is 0.3 W/m·K or more as measured by a hot disk in accordance with ISO 22007-2. The thermally conductive particles include inorganic particles (a) with a specific surface area of 1 m²/g or less, which is a BET specific surface area and is measured in accordance with JIS R 1626. The inorganic particles (a) are coated with the adhesive polymer. The adhesive polymer contains a methyl hydrogen polysiloxane, an epoxy group- containing alkyltrialkoxysilane, and a cyclic polysiloxane oligomer.

A method for producing a thermally conductive composition of the present invention provides the thermally conductive composition as described above. The method includes the following: a first mixing process of mixing the adhesive polymer and inorganic particles (a) with a specific surface area of 1 m²/g or less so that the inorganic particles (a) are coated with the adhesive polymer; a second mixing process of adding and mixing a base polymer; and a curing process.

### Effects of the Invention

The present invention requires that the thermally conductive composition have a thermal conductivity of 0.3 W/m·K or more, that the thermally conductive particles include inorganic particles (a) with a specific surface area of 1 m²/g or less, and that the inorganic particles (a) be coated with the adhesive polymer. With this configuration, the present invention can provide the thermally conductive composition that has high thermal conductive properties, a high compression repulsive force, and less interfacial debonding resulting from stress. The present invention also can provide a method for producing the thermally conductive composition. The production method of the present invention includes a first mixing process of mixing the adhesive polymer and the inorganic particles (a) with a specific surface area of 1 m²/g or less so that the inorganic particles (a) are coated with the adhesive polymer, a second mixing process of adding and mixing the base polymer, and a curing process. Thus, the thermally conductive composition of the present invention can be produced efficiently and reasonably.

### Brief Description of Drawings

[FIG. 1] FIGS. 1A to 1B are diagrams illustrating a method for measuring a thermal conductivity used in an example of the present invention.
[FIG. 2] FIG. 2 is a diagram illustrating a method for measuring a tensile lap-shear strength used in an example of the present invention.
[FIG. 3] FIG. 3 is image data by a scanning electron microscope/energy dispersive x-ray spectroscopy (SEM/EDX), showing a fracture surface of a thermally conductive composition sheet in Example 1 of the present invention.
[FIG. 4] FIG. 4 is image data by a scanning electron microscope/energy dispersive x-ray spectroscopy (SEM/EDX), showing a fracture surface of a thermally conductive composition sheet in Comparative Example 1.

### Description of the Invention

It is generally known that the effect of improving the interface between inorganic particles and a polymer cannot easily be achieved by a surface treatment process using, e.g., a silane coupling agent or by integral blending when the inorganic particles have a small specific surface area (such as large-size inorganic particles).

Therefore, debonding is likely to occur at the interface between the inorganic particles and the polymer, and there is a problem of cracks that would result from the debonding due to stress.

To deal with the problem, the present inventors added the adhesive polymer, first mixed the adhesive polymer and inorganic particles (a) with a specific surface area of 1 m²/g or less, and then mixed inorganic particles (b) with a specific surface area of more than 1 m²/g and a base polymer. Consequently, the present inventors found that this was effective in reducing cracks. The present invention has been completed based on such an idea.

In this specification, the inorganic particles of 1 m²/g or less are referred to as inorganic particles (a) and the inorganic particles of more than 1 m²/g are referred to as inorganic particles (b).

The present invention is directed to a thermally conductive composition that contains a base polymer, an adhesive polymer, and thermally conductive particles as claimed in claim 1. The thermal conductivity of the thermally conductive composition is 0.3 W/m·K or more, preferably 0.5 W/m·K or more, and further preferably 1 W/m·K or more. The upper limit is preferably 15 W/m·K or less. The thermally conductive composition also has electrical insulation properties.

The thermally conductive particles of the present invention include inorganic particles (a) with a specific surface area of 1 m²/g or less. The specific surface area of the inorganic particles (a) is preferably 0.1 to 1 m²/g, and more preferably 0.1 to 0.5 m²/g. The inorganic particles (a) are coated with the adhesive polymer. The inorganic particles (a) are first mixed with the adhesive polymer and thus coated with the adhesive polymer.

The base polymer and the adhesive polymer are both preferably silicone polymers. The silicone polymer has a high heat resistance and is not likely to be degraded or decomposed by a heat resistance test.

A tensile lap-shear strength of the adhesive polymer with respect to an aluminum plate is preferably 50 N/cm² or more, more preferably 80 N/cm² or more, and further preferably *100* N/cm² or more. The upper limit is preferably 800 N/cm² or less, more preferably 500 N/cm² or less, and further preferably 300 N/cm² or less.

The adhesive polymer contains a methyl hydrogen polysiloxane, an epoxy group-containing alkyltrialkoxysilane, and a cyclic polysiloxane oligomer. Thus, the adhesive polymer can maintain high adhesiveness to the inorganic particles (A).

The base polymer is preferably an addition curable silicone polymer. This is because curing of the addition curable silicone polymer can easily be controlled as compared to a peroxide curable silicone polymer and a condensation curable silicone polymer, and no by-product is produced. The use of the condensation curable silicone polymer may result in insufficient curing of the inside of the silicone polymer. Therefore, the addition curable silicone polymer is preferred.

It is preferable that the thermally conductive composition further contains a silicone oil. The presence of the adhesive polymer is likely to increase the viscosity of the materials before curing or make the cured product harder. When a silicone oil is added, the viscosity of the materials before curing is reduced and the workability is improved Moreover, the cured product becomes soft. The amount of the silicone oil added is preferably 5 to 30 parts by weight with respect to 100 parts by weight of the base polymer component in terms of curability and workability.

The thermally conductive particles are preferably composed of at least one selected from alumina, zinc oxide, magnesium oxide, aluminum nitride, boron nitride, aluminum hydroxide, and silica. This is because these particles have high thermal conductive properties and excellent electrical insulation properties, and are also easy to use as materials for a thermally conductive composition sheet.

The thermally conductive composition is preferably formed into a sheet. The thermally conductive composition in the form of a sheet has good usability. In addition to the sheet, the thermally conductive composition may be a potting material. The potting material is synonymous with a casting material. The thermally conductive composition is in an uncured state when used as a potting material. In this case, the thermally conducive composition is cured after it has been placed in a mold.

The amount of the thermally conductive particles is preferably 100 to 3000 parts by weight with respect to 100 parts by weight of a matrix component. This allows the thermally conductive composition sheet to have a thermal conductivity of 0.3 W/m·K or more. The amount of the thermally conductive particles is more preferably 400 to 3000 parts by weight, and further preferably 800 to 3000 parts by weight with respect to 100 parts by weight of the matrix component. The amount of the inorganic particles (a) with a specific surface area of 1 m²/g or less is preferably 10 to 90 parts by weight with respect to 100 parts by weight of the total amount of the thermally conductive particles. The matrix component is a mixture of the base polymer, the adhesive polymer, and the silicone oil.

The thermally conductive particles may be surface treated with a silane compound, a titanate compound, an aluminate compound, or partial hydrolysates thereof. This can prevent the deactivation of a curing catalyst or a crosslinking agent and improve the storage stability.

It is preferable that the thermally conductive composition of the present invention is obtained by crosslinking of a compound with the following composition.

### 1. First mixing process

The adhesive polymer and the inorganic particles (a) with a specific surface area of 1 m²/g or less are mixed so that the inorganic particles (a) are coated with the adhesive polymer. Thus, a first mixture is provided. The amount of the adhesive polymer added is preferably 5 to 35 parts by weight with respect to 100 parts by weight of the base polymer.

The adhesive polymer contains a methyl hydrogen polysiloxane, an epoxy group-containing alkyltrialkoxysilane, and a cyclic polysiloxane oligomer. Examples of the epoxy group-containing alkyltrialkoxysilane include γ-glycidoxypropyltrimethoxysilane expressed by the following chemical formula (chemical formula 1). Examples of the cyclic polysiloxane oligomer include octamethylcyclotetrasiloxane expressed by the following chemical formula (chemical formula 2).

The thermally conductive particles are preferably added in an amount of 400 to 3000 parts by weight with respect to 100 parts by weight of the matrix component. The amount of the inorganic particles (a) with a specific surface area of 1 m²/g or less is preferably 10 to 90 parts by weight with respect to 100 parts by weight of the total amount of the thermally conductive particles.

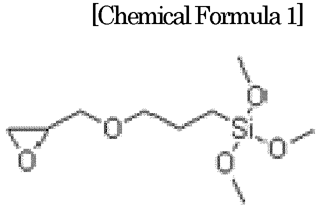

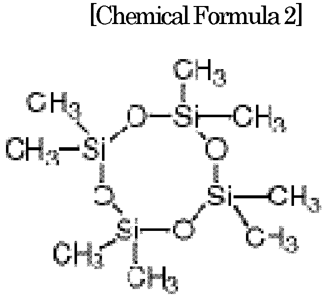

### 2. Second mixing process

Next, the base polymer, a catalyst, the inorganic particles (b), and other additives are added to the first mixture and then mixed together to form a sheet. The sheet is then cured. The base polymer contains the following base polymer component (component A), crosslinking component (component B), and catalyst component (component C).

Hereinafter, each component that is to be mixed in the second mixing process will be described.

### (1) Base polymer component (component A)

The base polymer component is an organopolysiloxane containing two or more alkenyl groups bonded to silicon atoms per molecule. The organopolysiloxane containing two or more alkenyl groups is the base resin (base polymer component) of a silicone rubber composition of the present invention. In the organopolysiloxane, two or more alkenyl groups having 2 to 8 carbon atoms, and particularly 2 to 6 carbon atoms such as vinyl groups or allyl groups are bonded to the silicon atoms per molecule. The viscosity of the organopolysiloxane is preferably 10 to 100000 mPa·s, and more preferably 100 to 10000 mPa·s at 25°C in terms of workability and curability.

Specifically, an organopolysiloxane expressed by the following general formula (chemical formula 3) is used. The organopolysiloxane contains an average of two or more alkenyl groups per molecule, in which the alkenyl groups are bonded to silicon atoms at both ends of the molecular chain. The organopolysiloxane is a linear organopolysiloxane whose side chains are blocked with alkyl groups. The viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

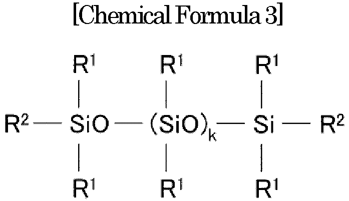

In the formula, R¹ represents substituted or unsubstituted monovalent hydrocarbon groups that are the same as or different from each other and have no aliphatic unsaturated bond, R² represents alkenyl groups, and k represents 0 or a positive integer. The monovalent hydrocarbon groups represented by R¹ have, e.g., 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups. The alkenyl groups represented by R² have, e.g., 2 to 6 carbon atoms, and more preferably 2 to 3 carbon atoms. Specific examples of the alkenyl groups include vinyl, allyl, propenyl, isopropenyl, butenyl, isobutenyl, hexenyl, and cyclohexenyl groups. In particular, the vinyl group is preferred. In the general formula (chemical formula 3), k is typically 0 or a positive integer satisfying 0≤k≤ 10000, preferably 5≤k≤2000, and more preferably 10≤k≤1200.

The component A may also include an organopolysiloxane having three or more, typically 3 to 30, and preferably about 3 to 20, alkenyl groups bonded to silicon atoms per molecule. The alkenyl groups have 2 to 8 carbon atoms, and particularly 2 to 6 carbon atoms and can be, e.g., vinyl groups or allyl groups. The molecular structure may be a linear, ring, branched, or three-dimensional network structure. The organopolysiloxane is preferably a linear organopolysiloxane in which the main chain is composed of repeating diorganosiloxane units, and both ends of the molecular chain are blocked with triorganosiloxy groups. The viscosity of the linear organopolysiloxane may be 10 to 100000 mPa·s, and particularly 100 to 10000 mPa·s at 25°C.

Each of the alkenyl groups may be bonded to any part of the molecule. For example, the alkenyl group may be bonded to either a silicon atom that is at the end of the molecular chain or a silicon atom that is not at the end (but in the middle) of the molecular chain. In particular, a linear organopolysiloxane expressed by the following general formula (chemical formula 4) is preferred. The linear organopolysiloxane has 1 to 3 alkenyl groups on each of the silicon atoms at both ends of the molecular chain. In this case, however, if the total number of the alkenyl groups bonded to the silicon atoms at both ends of the molecular chain is less than 3, at least one alkenyl group is bonded to the silicon atom that is not at the end (but in the middle) of the molecular chain (e.g., as a substituent in the diorganosiloxane unit). As described above, the viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

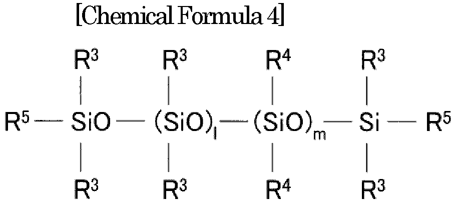

In the formula, R³ represents substituted or unsubstituted monovalent hydrocarbon groups that are the same as or different from each other, and at least one of them is an alkenyl group, R⁴ represents substituted or unsubstituted monovalent hydrocarbon groups that are the same as or different from each other and have no aliphatic unsaturated bond, R⁵ represents alkenyl groups, and l and m represent 0 or a positive integer. The monovalent hydrocarbon groups represented by R³ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; alkenyl groups such as vinyl, allyl, propenyl, isopropenyl, butenyl, hexenyl, cyclohexenyl, and octenyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups.

The monovalent hydrocarbon groups represented by R⁴ also preferably have 1 to 10 carbon atoms, and more preferably 1 to 6 carbon atoms. The monovalent hydrocarbon groups may be the same as the specific examples of R¹, but do not include an alkenyl group. The alkenyl groups represented by R⁵ have, e.g., 2 to 6 carbon atoms, and more preferably 2 to 3 carbon atoms. Specific examples of the alkenyl groups are the same as those of R² in the general formula (chemical formula 3), and the vinyl group is preferred.

In the general formula (chemical formula 4), l and m are typically 0 or positive integers satisfying 0 <l+m≤10000, preferably 5≤l+m≤2000, and more preferably 10≤l+m≤1200. Moreover, l and m are integers satisfying 0<l(l+m)≤0.2, and preferably 0.0011≤l/(l++m)≤ 0.1.

### (2) Crosslinking component (component B)

The organohydrogenpolysiloxane of the component B acts as a crosslinking agent. The addition reaction (hydrosilylation) between SiH groups in the component B and alkenyl groups in the component A produces a cured product. Any organohydrogenpolysiloxane that has two or more hydrogen atoms (i.e., SiH groups) bonded to silicon atoms per molecule may be used. The molecular structure of the organohydrogenpolysiloxane may be a linear, ring, branched, or three-dimensional network structure. The number of silicon atoms in a molecule (i.e., the degree of polymerization) may be 2 to 1000, and particularly about 2 to 300.

The locations of the silicon atoms to which the hydrogen atoms are bonded are not particularly limited The silicon atoms may be either at the ends or not at the ends (but in the middle) of the molecular chain. The organic groups bonded to the silicon atoms other than the hydrogen atoms may be, e.g., substituted or unsubstituted monovalent hydrocarbon groups that have no aliphatic unsaturated bond, which are the same as those of R¹ in the general formula (chemical formula 3).

The organohydrogenpolysiloxane of the component B may have the following structure.

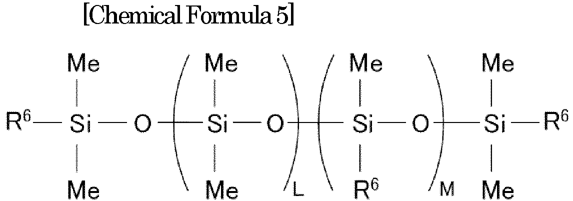

In the formula, R⁶ may be the same as or different from each other and represents hydrogen, alkyl groups, phenyl groups, epoxy groups, acryloyl groups, methacryloyl groups, or alkoxy groups, and at least two of them are hydrogen. L represents an integer of 0 to 1000, and particularly 0 to 300, and M represents an integer of 1 to 200.

### (3) Catalyst component (component C)

The catalyst component of the component C accelerates the first stage curing of the composition. The component C may be a catalyst used for a hydrosilylation reaction. Examples of the catalyst include platinum group metal catalysts such as platinum-based, palladium-based, and rhodium-based catalysts. The platinum-based catalysts include, e.g., platinum black, platinum chloride, chloroplatinic acid, a reaction product of chloroplatinic acid and monohydric alcohol, a complex of chloroplatinic acid and olefin or vinylsiloxane, and platinum bisacetoacetate. The component C may be mixed in an amount required for curing. The amount of the component C can be appropriately adjusted in accordance with the desired curing rate or the like. The component C is preferably added at a concentration of 0.01 to 1000 ppm based on the weight of metal atoms with respect to the component A.

### (4) Thermally conductive particles

The thermally conductive particles to be added in the second mixing process are inorganic particles (b) with a specific surface area of more than 1 m²/g. The amount of the inorganic particles (a) with a specific surface area of 1 m²/g or less is preferably 10 to 90 parts by weight with respect to 100 parts by weight of the total amount of the thermally conductive particles. The inorganic particles (b) preferably make up the rest. This configuration allows small-size inorganic particles to fill the spaces between large-size inorganic particles, which can provide nearly the closest packing and improve the thermal conductive properties.

The thermally conductive particles in the first and second mixing processes are preferably composed of at least one selected from alumina, zinc oxide, magnesium oxide, aluminum nitride, boron nitride, aluminum hydroxide, and silica. The thermally conductive particles may have various shapes such as spherical, scaly, and polyhedral. When alumina is used, α-alumina with a purity of 99.5% by mass or more is preferred. The specific surface area is a BET specific surface area and is measured in accordance with JIS R 1626. The average particle size of the thermally conductive particles may be measured with a laser diffraction scattering method to determine D50 (median diameter) in a volume-based cumulative particle size distribution. The method may use, e.g., a laser diffraction/scattering particle size distribution analyzer LA-950 S2 manufactured by HORIBA, Ltd.

It is preferable that the inorganic particles (b) used in the second mixing process are surface treated with a silane compound expressed by RₐSi(OR')₃₋ₐ (where R represents a substituted or unsubstituted organic group having 1 to 20 carbon atoms, R' represents an alkyl group having 1 to 4 carbon atoms, and a is 0 or 1) or a partial hydrolysate of the silane compound. Examples of an alkoxysilane compound (simply referred to as "silane" in the following) expressed by RₐSi(OR')₃₋ₐ (where R represents a substituted or unsubstituted organic group having 1 to 20 carbon atoms, R' represents an alkyl group having 1 to 4 carbon atoms, and a is 0 or 1) include the following: methyltrimethoxysilane; ethyltrimethoxysilane; propyltrimethoxysilane; butyltrimethoxysilane; pentyltrimethoxysilane; hexyltrimethoxysilane; hexyltriethoxysilane; octyltrimethoxysilane; octyltriethoxysilane; decyltrimethoxysilane; decyltriethoxysilane; dodecyltrimethoxysilane; dodecyltriethoxysilane; hexadecyltrimethoxysilane; hexadecyltriethoxysilane; octadecyltrimethoxysilane; and octadecyltriethoxysilane. These silane compounds may be used individually or in combinations of two or more. The alkoxysilane and one-end silanol siloxane may be used together as the surface treatment agent. In this case, the surface treatment may include adsorption in addition to a covalent bond.

### (5) Silicone oil

The silicone oil is preferably a polydimethylsiloxane-based silicone oil. The viscosity of the silicone oil is preferably 10 to 10000 mPa·s (25°C), which is measured by a rotational viscometer.

### (6) Other additives

The composition of the present invention may include components other than the above as needed. For example, the composition may include an inorganic pigment such as colcothar, and alkyltrialkoxysilane used, e.g., for the surface treatment of the inorganic particles. Moreover, alkoxy group-containing silicone may be added as a material, e.g., for the surface treatment of the inorganic particles.

### Examples

Hereinafter, the present invention will be described by way of examples. However, the present invention is not limited to the following examples.

### <Thermal conductivity>

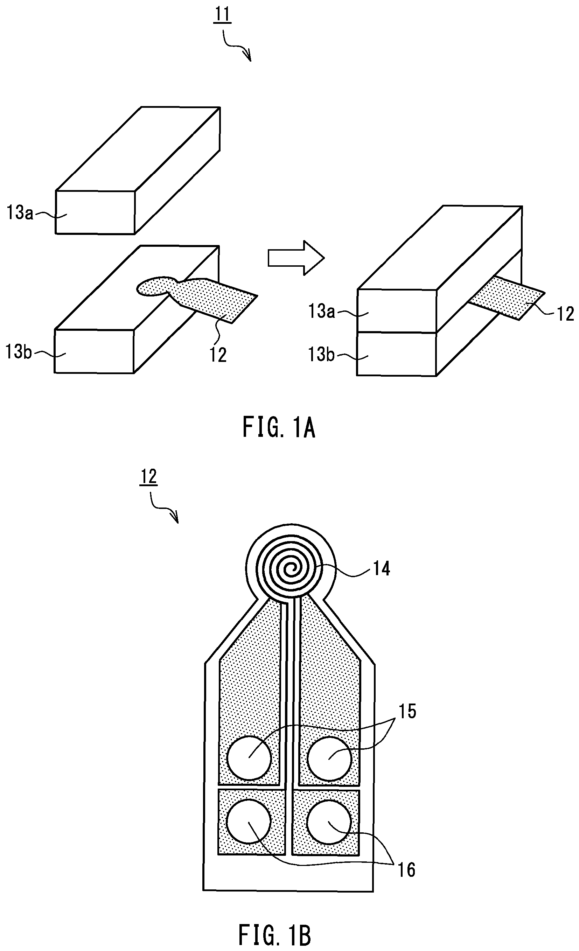

The thermal conductivity of the thermally conductive composition was measured by a hot disk (in accordance with ISO 22007-2). As shown in FIG. 1A, using a thermal conductivity measuring apparatus 11, a polyimide film sensor 12 was sandwiched between two thermally conductive composition samples 13a, 13b, and constant power was applied to the sensor 12 to generate a certain amount of heat. Then, the thermal characteristics were analyzed from a temperature rise value of the sensor 12. The sensor 12 has a tip 14 with a diameter of 7 mm. As shown in FIG. 1B, the tip 14 has electrodes with a double spiral structure. Moreover, an electrode 15 for an applied current and an electrode 16 for a resistance value (temperature measurement electrode) are located on the lower portion of the sensor 12. The thermal conductivity was calculated by the following formula (1). $λ = \frac{{P}_{0} ⋅ D \left(τ\right)}{{π}^{3 / 2} ⋅ r} ⋅ \frac{D \left(τ\right)}{ΔT \left(τ\right)}$
- λ:: Thermal conductivity (W/m·K)
- P₀:: Constant power (W)
- r:: Radius of sensor (m)
- τ:: $\sqrt{α ⋅ t / {r}^{2}}$
- α:: Thermal diffusivity of sample (m²/s)
- t:: Measuring time (s)
- D(τ):: Dimensionless function of τ
- ΔT(τ):: Temperature rise of sensor (K)

### <Viscosity>

The viscosity was measured in accordance with JIS K 7117-1:1999.
Measuring device: Brookfield rotational viscometer, type C (in which the spindle number is changed with the viscosity)
Rotational speed: 10 RPM
Measurement temperature: 25°C

### <Hardness>

Asker C hardness was measured in accordance with JIS K 7312.

### <Tensile lap-shear strength>

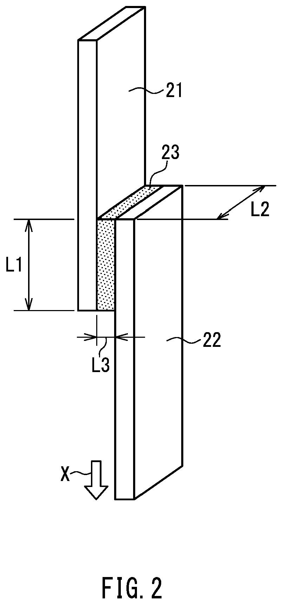

The tensile lap-shear strength was measured by the following method in accordance with JIS K 6850. FIG. 2 illustrates the method.
Measuring device: UTM-4-100 manufactured by Toyo Baldwin Co., Ltd.
Adhesive area: L1 = 3 cm, L2 = 2.5 cm
Test piece: A pair of aluminum alloy plates 21, 22 bonded together with a polymer 23 was used as a test piece. The aluminum alloy plates were fixed so that the thickness L3 of the polymer was 0.14 cm, and then the polymer was cured.
Test method: Using the test piece, a tensile test was performed. The maximum value (N) of the force at break was taken as an adhesive break load (i.e., a load at break), and the value obtained by dividing the adhesive break load by the adhesive area (3 cm × 2.5 cm) was a tensile lap-shear strength (N/cm²).
Curing conditions: room temperature for 24 hours
Tensile rate: 500 mm/min

### <Tensile strength>

The tensile strength was measured by the following method in accordance with JIS K 6521.
Measuring device: RTG-1210 (load cell 1 kN) manufactured by A&D Company, Limited
Test piece: No. 2 dumbbell specimen in accordance with JIS K 6251
Test method: Using the test piece, a tensile test was performed. The tensile strength (MPa) at break was measured.
Tensile rate: 500 mm/min

### <Compression repulsive force>

Measuring device: MODEL 1310 NW (load cell 1 kN) manufactured by Aikoh Engineering Co., Ltd.
Test piece: 16 mm (diameter)
Aluminum plate: 22.8 mm × 22.8 mm × 4 mmt
SUS plate: 13.9 mm (diameter) × 4 mmt
Compression rate: 10 mm/min
Test method: The test piece was placed on the aluminum plate, and the SUS plate was placed on the test piece. This layered material was compressed to 0.4 mm and allowed to stand still for 10 minutes. Then, the load value was measured as a compression repulsive force (N).

### (Example 1)

### (1) Adhesive polymer

A commercially available adhesive polymer was used. The adhesive polymer contained 20 to 30% by mass of methyl hydrogen polysiloxane, 1 to 10% by mass of γ-glycidoxypropyltrimethoxysilane expressed by the chemical formula 1, 0.1 to 1% by mass of octamethylcyclotetrasiloxane expressed by the chemical formula 2, 1 to 10% by mass of carbon black, and the rest silicone polymer.

Table 1 shows the tensile lap-shear strength of the adhesive polymer with respect to the aluminum plate.

### (2) Base polymer

The base polymer was a commercially available two-part room temperature curing silicone polymer. The two-part room temperature curing silicone polymer was composed of a solution A and a solution B. The solution A previously contained a base polymer component and a platinum-based metal catalyst. The solution B previously contained a base polymer component and a crosslinking component.

Table 1 shows the tensile lap-shear strength of the base polymer with respect to the aluminum plate.

**[TABLE 1]**

| | Tensile lap-shear strength (N/cm²) |
|---|---|
| Adhesive polymer | 112 |
| Base polymer | 27 |

### (3) Silicone oil

A dimethylpolysiloxane-based silicone oil with a viscosity of 97 mPa·s, which was measured by a rotational viscometer, was used.

### (4) Thermally conductive particles

The thermally conductive particles were composed of alumina as shown in Table 2.

**[TABLE 2]**

| Thermally conductive particles | Average particle size (µm) | Specific surface area (m²/g) | Shape |
|---|---|---|---|
| Alumina powder A | 35 | 0.2 | spherical |
| Alumina powder B | 2.1 | 1.8 | crushed |
| Alumina powder C | 0.3 | 7.4 | irregular |

### (5) Production of compound

The adhesive polymer and the alumina powder A were mixed well to form a mixture 1 in the first mixing process.

Next, the base polymer, the alumina powder B, the alumina powder C, a platinum-based catalyst, and a crosslinking component were added to the mixture 1 and then mixed well to form a mixture 2 in the second mixing process.

### (6) Formation of thermally conductive composition

The mixture 2 was sandwiched between polyester (PET) films and rolled into a sheet with a thickness of 2 mm. The sheet was cured at 100°C for 2 hours.

### (Comparative Example 1)

A thermally conductive composition was produced in the same manner as Example 1 except that all the materials were mixed at the same time in the above process of forming the compound.

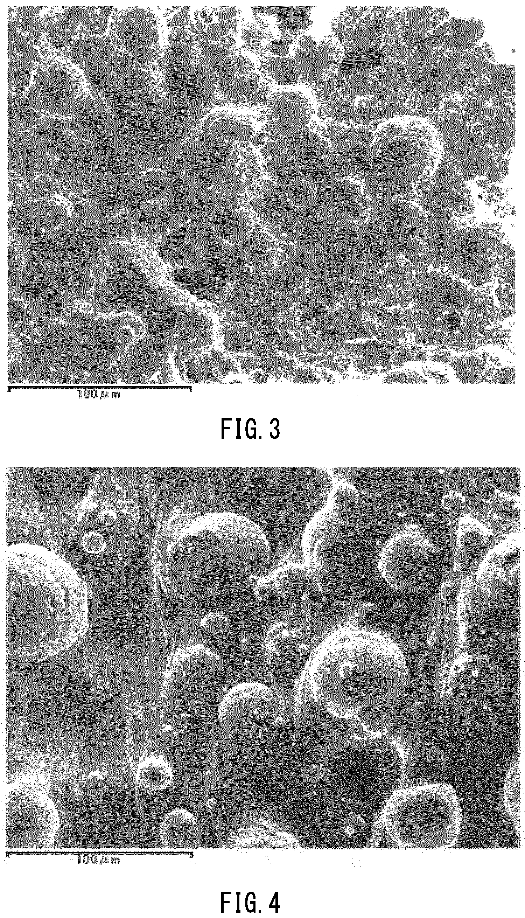

Tables 3 to 4 and FIGS. 3 to 4 show the conditions and physical properties of the thermally conductive compositions thus obtained. FIGS. 3 to 4 are surface micrographs obtained by a scanning electron microscope/energy dispersive x-ray spectroscopy (SEM/EDX).

Table 4 shows the results of measurement of Si and Al mass concentrations (mass%) on the surface of the inorganic particles (a) with a specific surface area of 1 m²/g or less by using the SEM/EDX.

**[TABLE 3]**

| | Example 1 (Mixing adhesive polymer and alumina powderAin the first mixing process) | Comparative Example 1 (Mixing all materials at the same time) |
|---|---|---|
| Base polymer (g) | 65 | 65 |
| Silicone oil (g) | 15 | 15 |
| Adhesive polymer (g) | 20 | 20 |
| Platinum-based catalyst (g) | 2 | 2 |
| Alumina powder A (g) | 770 | 770 |
| Alumina powder B+ Alumina powder C (g) | 432 | 432 |
| Asker C hardness | 27 | 27 |
| Tensile strength (kPa) | 180 | 150 |
| Compression repulsive force (N) | 341 | 133 |
| Thermal conductivity (W/m·K) | 3.4 | 3.4 |

**[TABLE 4]**

| | Example 1 | Comparative Example 1 |
|---|---|---|
| Mass concentration on the surface of inorganic particles (a), Si (mass%): X | 5.9 | 2.7 |
| Mass concentration on the surface of inorganic particles (a), Al (mass%): Y | 21.5 | 32.2 |
| Ratio of Si to Al (%): (X/Y) × 100 | 27 | 9 |
| Appearance of the surface | FIG.3 | FIG. 4 |

As can be seen from Table 3, the tensile strength and the compression repulsive force in Example 1 are higher than those in Comparative Example 1. This can be attributed to a high adhesive force between the adhesive polymer and the surface of the inorganic particles (a).

As can be seen from Table 4, the ratio of Si to Al in Example 1 is higher than that in Comparative Example 1. This indicates that the polymer component is present in large amount on the surface of the large-size particles. Moreover, the image data from the scanning electron microscope/energy dispersive x-ray spectroscopy (SEM/EDX) also confirm that the surface of the inorganic particles (a) is coated with the polymer component in Example 1 (FIG. 3), while the inorganic particles (a) are exposed in Comparative Example 1 (FIG. 4).

### Industrial Applicability

The thermally conductive composition of the present invention is useful as a heat dissipating material that is interposed between the heat generating member and the heat dissipating member of e.g., electronic components such as LEDs and household electrical appliances, information and communication modules including optical communication equipment, and components mounted on vehicles. The thermally conductive composition of the present invention is also useful as a heat dissipating material for electronic components including semiconductors.

### Description of Reference Numerals

- 11: Thermal conductivity measuring apparatus
- 12: Polyimide film sensor
- 13a, 13b: Thermally conductive composition sample
- 14: Tip of the sensor
- 15: Electrode for applied current
- 16: Electrode for resistance value (temperature measurement electrode)
- 21, 22: Aluminum alloy plate
- 23: Polymer

## Claims

1. A thermally conductive composition comprising:
a base polymer, an adhesive polymer, and thermally conductive particles,
wherein a thermal conductivity of the thermally conductive composition is 0.3 W/m·K or more as measured by a hot disk in accordance with ISO 22007-2,
the thermally conductive particles include inorganic particles (a) with a specific surface area of 1 m²/g or less, which is a BET specific surface area and is measured in accordance with JIS R 1626,
the inorganic particles (a) are coated with the adhesive polymer, and
the adhesive polymer contains a methyl hydrogen polysiloxane, an epoxy group-containing alkyltrialkoxysilane, and a cyclic polysiloxane oligomer.

2. The thermally conductive composition according to claim 1, wherein the base polymer is a silicone polymer.

3. The thermally conductive composition according to claim 1 or 2, wherein a tensile lap-shear strength of the adhesive polymer with respect to an aluminum plate is 50 N/cm² or more.

4. The thermally conductive composition according to any one of claims 1 to 3, wherein the base polymer is an addition curable silicone polymer.

5. The thermally conductive composition according to any one of claims 1 to 4, further comprising a silicone oil.

6. The thermally conductive composition according to any one of claims 1 to 5, wherein the thermally conductive particles are composed of at least one selected from a metal oxide, a metal hydroxide, a metal nitride, and silica.

7. The thermally conductive composition according to any one of claims 1 to 6, further comprising inorganic particles (b) with a specific surface area of more than 1 m²/g.

8. The thermally conductive composition according to claim 7, wherein the inorganic particles (b) are surface treated with a silane compound, a titanate compound, an aluminate compound, or partial hydrolysates thereof

9. The thermally conductive composition according to any one of claims 1 to 8, wherein the thermally conductive composition is in the form of a sheet.

10. The thermally conductive composition according to any one of claims 1 to 9, wherein an amount of the adhesive polymer is 5 to 35 parts by weight with respect to 100 parts by weight of the base polymer.

11. A method for producing the thermally conductive composition according to any one of claims 1 to 10, comprising:
a first mixing process of mixing the adhesive polymer and the inorganic particles (a) with a specific surface area of 1 m²/g or less so that the inorganic particles (a) are coated with the adhesive polymer;
a second mixing process of adding and mixing the base polymer; and
a curing process.

12. The method according to claim 11, wherein the inorganic particles (b) with a specific surface area of more than 1 m²/g are added in the second mixing process.

## Patentansprüche

1. Wärmeleitende Zusammensetzung, umfassend:
ein Basispolymer, ein Haftpolymer und wärmeleitende Partikel,
wobei die Wärmeleitfähigkeit der wärmeleitenden Zusammensetzung, gemessen mit einer Heißscheibe in Übereinstimmung mit ISO 22007-2, 0,3 W/m·K oder mehr ist,
die wärmeleitenden Partikel anorganische Partikel (a) mit einer spezifischen Oberfläche von 1 m²/g oder weniger einschließen, die eine BET-spezifische Oberfläche ist und in Übereinstimmung mit JIS R 1626 gemessen wird,
die anorganischen Partikel (a) mit dem Haftpolymer beschichtet sind, und
das Haftpolymer ein Methylhydrogenpolysiloxan, ein Epoxidgruppen-haltiges Alkyltrialkoxysilan und ein zyklisches Polysiloxan-Oligomer enthält.

2. Wärmeleitende Zusammensetzung nach Anspruch 1, wobei das Basispolymer ein Silikonpolymer ist.

3. Wärmeleitende Zusammensetzung nach Anspruch 1 oder 2, wobei die Zugscherfestigkeit des Haftpolymers in Bezug auf eine Aluminiumplatte 50 N/cm² oder mehr ist.

4. Wärmeleitende Zusammensetzung nach einem der Ansprüche 1 bis 3, wobei das Basispolymer ein additionshärtbares Silikonpolymer ist.

5. Wärmeleitende Zusammensetzung nach einem der Ansprüche 1 bis 4, weiter umfassend ein Silikonöl.

6. Wärmeleitende Zusammensetzung nach einem der Ansprüche 1 bis 5, wobei die wärmeleitenden Partikel aus mindestens einem bestehen, ausgewählt aus einem Metalloxid, einem Metallhydroxid, einem Metallnitrid und Siliziumdioxid.

7. Wärmeleitende Zusammensetzung nach einem der Ansprüche 1 bis 6, weiter umfassend anorganische Partikel (b) mit einer spezifischen Oberfläche von mehr als 1 m²/g.

8. Wärmeleitende Zusammensetzung nach Anspruch 7, wobei die anorganischen Partikel (b) mit einer Silanverbindung, einer Titanatverbindung, einer Aluminatverbindung oder Teilhydrolysaten davon oberflächenbehandelt sind.

9. Wärmeleitende Zusammensetzung nach einem der Ansprüche 1 bis 8, wobei die wärmeleitende Zusammensetzung in Form einer Folie ist.

10. Wärmeleitende Zusammensetzung nach einem der Ansprüche 1 bis 9, wobei eine Menge des Haftpolymers 5 bis 35 Gewichtsteile in Bezug auf 100 Gewichtsteile des Basispolymers ist.

11. Verfahren zum Herstellen der wärmeleitenden Zusammensetzung nach einem der Ansprüche 1 bis 10, umfassend:
einen ersten Mischprozess des Mischens des Haftpolymers und der anorganischen Partikel (a) mit einer spezifischen Oberfläche von 1 m²/g oder weniger, sodass die anorganischen Partikel (a) mit dem Haftpolymer beschichtet werden;
einen zweiten Mischprozess des Hinzufügens und Mischens des Basispolymers; und
einen Aushärtungsprozess.

12. Verfahren nach Anspruch 11, wobei die anorganischen Partikel (b) mit einer spezifischen Oberfläche von mehr als 1 m²/g im zweiten Mischprozess hinzugefügt werden.

## Revendications

1. Composition thermoconductrice comprenant :
un polymère de base, un polymère adhésif et des particules thermoconductrices,
dans laquelle une thermoconductivité de la composition thermoconductrice est de 0,3 W/m·K ou plus, mesurée au moyen d'un Hot Disk conformément à l'ISO 22007-2,
les particules thermoconductrices incluent des particules inorganiques (a) présentant une superficie spécifique de 1 m²/g ou moins, qui est une superficie spécifique BET et est mesurée conformément à la norme JIS R 1626,
les particules inorganiques (a) sont revêtues du polymère adhésif, et
le polymère adhésif contient un poly(méthylhydrogéno)siloxane, un alkyltrialcoxysilane contenant un groupe époxy et un oligomère de polysiloxane cyclique.

2. Composition thermoconductrice selon la revendication 1, dans laquelle le polymère de base est un polymère de silicone.

3. Composition thermoconductrice selon la revendication 1 ou la revendication 2, dans laquelle une résistance au cisaillement en traction d'un assemblage à recouvrement du polymère adhésif par rapport à une plaque d'aluminium est de 50 N/cm² ou plus.

4. Composition thermoconductrice selon l'une quelconque des revendications 1 à 3, dans laquelle le polymère de base est un polymère de silicone durcissable par addition.

5. Composition thermoconductrice selon l'une quelconque des revendications 1 à 4, comprenant en outre une huile de silicone.

6. Composition thermoconductrice selon l'une quelconque des revendications 1 à 5, dans laquelle les particules thermoconductrices sont composées d'au moins un élément sélectionné parmi un oxyde métallique, un hydroxyde métallique, un nitrure métallique et la silice.

7. Composition thermoconductrice selon l'une quelconque des revendications 1 à 6, comprenant en outre des particules inorganiques (b) présentant une superficie spécifique de plus de 1 m²/g.

8. Composition thermoconductrice selon la revendication 7, dans laquelle les particules inorganiques (b) sont traitées en surface avec un composé silane, un composé titanate, un composé aluminate ou des hydrolysats partiels de ceux-ci.

9. Composition thermoconductrice selon l'une quelconque des revendications 1 à 8, dans laquelle la composition thermoconductrice est sous forme de feuille.

10. Composition thermoconductrice selon l'une quelconque des revendications 1 à 9, dans laquelle une quantité du polymère adhésif est de 5 à 35 parties en poids par rapport à 100 parties en poids du polymère de base.

11. Procédé de production de la composition thermoconductrice selon l'une quelconque des revendications 1 à 10, comprenant :
une première étape de mélange consistant à mélanger le polymère adhésif et les particules inorganiques (a) présentant une superficie spécifique de 1 m²/g ou moins de sorte que les particules inorganiques (a) soient revêtues du polymère adhésif ;
une deuxième étape de mélange consistant à ajouter et à mélanger le polymère de base ; et
une étape de durcissement.

12. Procédé selon la revendication 11, dans lequel les particules inorganiques (b) présentant une superficie spécifique de plus de 1 m²/g sont ajoutées dans la deuxième étape de mélange.
